# EUROPEAN PATENT APPLICATION

(11) **EP 4 243 501 A1**
(43) Date of publication of application: **13.09.2023**
(21) Application number: 21899831.8
(22) Date of filing: 12.11.2021
(51) Int. Cl.: H04W 48/08, H04W 48/18, H04W 88/06

(54) **SIM CARD SELECTION METHOD AND APPARATUS, AND TERMINAL AND STORAGE MEDIUM**

(30) Priority: 01.12.2020 CN 202011385196
(71) Applicant: ZTE Corporation, Shenzhen, Guangdong 518057 (CN)
(72) Inventor: WANG, Cheng, Shenzhen, Guangdong 518057 (CN)
(74) Representative: Savi, Massimiliano
(86) International application number: PCT/CN2021/130430
(87) International publication number: WO 2022/116797

(57) **Abstract**

A SIM card selection method and apparatus, and a terminal and a storage medium, wherein the SIM card selection method is applied to the terminal, and the terminal comprises at least two SIM cards. The SIM card selection method comprises: receiving a slice connection request sent by an application, the slice connection request comprising a current slice parameter (S 110); and querying a SIM card corresponding to the current slice parameter, and determining the SIM card corresponding to the current slice parameter to be a target SIM card for establishing a slice data connection (S120).

## Description

### CROSS-REFERENCE TO RELATED APPLICATION

This application is based on and claims the priority of Chinese patent application No. 202011385196.2 filed on December 01, 2020, the disclosure of which is incorporated herein by reference in its entirety.

### TECHNICAL FIELD

Embodiments of the present disclosure relate to but are not limited to the communication field, in particular to a subscriber identity module (SIM) card selection method and apparatus, a terminal device and a storage medium.

### BACKGROUND

In the era of 4G communications, mobile carriers provide data connection of only one grade of quality of service, while in the 5G era, every single mobile carrier provides slice data connection of different grades of quality of service and an application can set up its specific slice data connection. However, the existing terminal device with a dual-card system is only provided with a manual card switching function, that is, a user manually selects SIM card 1 or SIM card 2 for data service, and an application can only use the data connection service of the SIM card that has been selected by the user. If an application needs to use a slice of the card 1 but the card 2 has been selected for data connection, a problem may occur that the application cannot initiate the slice data connection.

### SUMMARY

An embodiment of the present disclosure provides a SIM card selection method and apparatus, a terminal device and a storage medium.

In accordance with a first aspect of the present disclosure, an embodiment provides a SIM card selection method, which is applied to a terminal device, the method including: receiving a slice connection request sent by an application, the slice connection request including a current slice parameter; and making a query to identify a SIM card corresponding to the current slice parameter, and determining the SIM card corresponding to the current slice parameter as a target SIM card for establishing a slice data connection.

In accordance with a second aspect of the present disclosure, an embodiment provides a SIM card selection apparatus, including: an acquisition module configured to receive a slice connection request sent by an application, the slice connection request including a current slice parameter; and a determination module configured to make a query to identify a SIM card corresponding to the current slice parameter and determine the SIM card corresponding to the current slice parameter as a target SIM card for establishing a slice data connection.

In accordance with a third aspect of the present disclosure, an embodiment provides a terminal device, including a memory, a processor, and a computer program stored on the memory and executable by the processor, where the computer program, when executed by the processor, causes the processor to perform the SIM card selection method described above.

In accordance with a fourth aspect of the present disclosure, an embodiment provides a computer-readable storage medium storing an information processing program which, when executed by a processor, causes the processor to perform the SIM card selection method described above.

### BRIEF DESCRIPTION OF DRAWINGS

Fig. 1 is a flowchart of a SIM card selection method provided by an embodiment of the present disclosure;
Fig. 2 is a flowchart of a SIM card selection method provided by an embodiment of the present disclosure, with the slice corresponding to a plurality of SIM cards;
Fig. 3 is a flowchart of determining a target SIM card according to a slice connection state in a SIM card selection method provided by an embodiment of the present disclosure;
Fig. 4 is a flowchart of determining a target SIM card according to a signal strength parameter in a SIM card selection method provided by an embodiment of the present disclosure;
Fig. 5 is a flowchart of determining a target SIM card according to a slice connection frequency parameter in a SIM card selection method provided by an embodiment of the present disclosure;
Fig. 6 is a flowchart of updating a slice connection frequency parameter in a SIM card selection method provided by an embodiment of the present disclosure;
Fig. 7 is a flowchart of a SIM card selection method provided by an embodiment of the present disclosure, with the slice corresponding to one SIM card;
Fig. 8 is a flowchart of slice matching in a SIM card selection method provided by an embodiment of the present disclosure;
Fig. 9 is a flowchart of establishing and applying for a slice after slice matching fails in a SIM card selection method provided by an embodiment of the present disclosure;
Fig. 10 is a flowchart of a SIM card selection method provided by another embodiment of the present disclosure;
Fig. 11 is a schematic diagram of a SIM card selection apparatus provided by an embodiment of the present disclosure; and
Fig. 12 is a schematic diagram of a terminal device according to an embodiment of the present disclosure.

### DETAILED DESCRIPTION

In order to make the purposes, technical schemes and advantages of the present disclosure more apparent, the present disclosure is described in detail in conjunction with the accompanying drawings and embodiments. It should be understood that the particular embodiments described herein are only intended to explain the present disclosure, and are not intended to limit the present disclosure.

It is to be noted that although a functional module division is shown in a schematic diagram of a device and a logical order is shown in a flowchart, the steps shown or described may be executed, in some cases, in a different module division from that of the device or in a different order from that in the flowchart.

This embodiment provides a SIM card selection method and apparatus, a terminal device and a storage medium. The SIM card selection method is applied to a terminal device including at least two SIM cards. The method includes: receiving a slice connection request sent by an application, the slice connection request including a current slice parameter; and making a query to identify a SIM card corresponding to the current slice parameter, and determining the SIM card corresponding to the current slice parameter as a target SIM card for establishing a slice data connection. The SIM card corresponding to the slice connection for the application and the SIM card corresponding to the data connection can be set as the same SIM card, thereby solving the problem that the application cannot initiate the slice data connection.

It is to be understood that the SIM card selection method and/or the SIM card selection apparatus provided by the embodiments of the present disclosure may be applied to a terminal device. The terminal device herein, which may also be referred to as a terminal, is a device with a wireless transceiver function. The terminal device may be a user equipment (UE), where the UE includes a handheld device, a vehicle-mounted device, a wearable device or a computing device that has a wireless communication function. For example, the UE may be a mobile phone, tablet computer or computer with a wireless transceiver function. The terminal device may also be a virtual reality (VR) terminal device, an augmented reality (AR) terminal device, a wireless terminal in industrial control, a wireless terminal in unmanned driving, a wireless terminal in telemedicine, a wireless terminal in smart grid, a wireless terminal in smart city, a wireless terminal in smart home, etc.

The embodiments of the present disclosure will be further explained below with reference to the accompanying drawings.

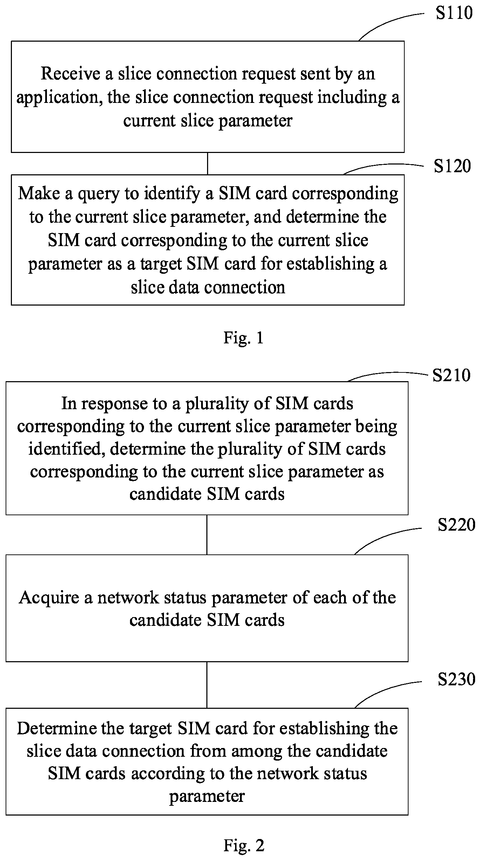

As shown in Fig. 1, Fig. 1 is a flowchart of a SIM card selection method in an embodiment. The SIM card selection method is applied to a SIM card selection apparatus in a terminal device. In an embodiment, the SIM card selection method includes but is not limited to the following steps.

At S 110, a slice connection request sent by an application is received, the slice connection request including a current slice parameter.

In an embodiment, the SIM card selection apparatus can acquire the slice connection request sent by the application, where the slice connection request may include the current slice parameter which may be used to determine the SIM card for the slice connection.

It should be noted that the slice parameter may include data network name (DNN) or application identifier (Application ID), traffic descriptor, which is a key element of UE Route Selection Policy (URSP), and other data, which are not specifically limited in this embodiment.

At S120, a query is made to identify a SIM card corresponding to the current slice parameter, and the SIM card corresponding to the current slice parameter is determined as a target SIM card for establishing a slice data connection.

In an embodiment, the SIM card selection apparatus can make a query with the acquired current slice parameter to obtain the target SIM card corresponding to the current slice parameter, and can establish data connection and slice connection through the target SIM card, thereby completing the slice data connection for the application, that is, the SIM card corresponding to the slice connection for the application and the SIM card corresponding to the data connection are set as the same SIM card, thereby solving the problem that the application cannot initiate the slice data connection.

In an embodiment, by performing the above steps S110 to S120, the SIM card selection apparatus can acquire the slice connection request sent by the application, where the slice connection request may include the current slice parameter which can be used to determine the SIM card for the slice connection, and then the SIM card selection apparatus can make a query with the acquired current slice parameter to obtain the target SIM card corresponding to the current slice parameter, and can establish data connection and slice connection through the target SIM card, thereby completing the slice data connection for the application, that is, the SIM card corresponding to the slice connection for the application and the SIM card corresponding to the data connection are set as the same SIM card, thereby solving the problem that the application cannot initiate the slice data connection.

It should be noted that the number of SIM cards provided in the terminal device according to the embodiments of the present disclosure is at least two, and may be two or three, which is not specifically limited in this embodiment.

It should be noted that the mobile carriers corresponding to different SIM cards may be the same or different, which is not specifically limited in this embodiment.

Referring to Fig. 2, in an embodiment, step S120 includes but is not limited to the following sub-steps.

At S210, in response to there being a plurality of SIM cards corresponding to the current slice parameter, the plurality of SIM cards corresponding to the current slice parameter are determined as candidate SIM cards.

In an embodiment, in response to a presence of a plurality of SIM cards corresponding to the current slice parameter in the terminal device, the plurality of corresponding SIM cards can be set as candidate SIM cards to prepare for further selection in the next step.

At S220, a network status parameter of each of the candidate SIM cards is acquired.

In an embodiment, after the candidate SIM cards are determined, the network status parameter of each of the candidate SIM cards can be acquired to prepare for analysis of the network status parameter in the next step.

It should be noted that the network status parameter may include a slice connection state, a signal strength parameter, a slice connection frequency parameter, or a connection cost. The connection cost is the influence of the selected SIM card for data connection on the use of slice with other applications. This embodiment does not specifically limit the network status parameter.

At S230, the target SIM card for establishing the slice data connection is determined from among the candidate SIM cards according to the network status parameter.

In an embodiment, the target SIM card for establishing the slice connection can be determined according to the network status parameters of all the candidate SIM cards, such that the slice data connection for the application can be completed, that is, the SIM card corresponding to the slice connection for the application and the SIM card corresponding to the data connection are set as the same SIM card, thereby solving the problem that the application cannot initiate the slice data connection.

In an embodiment, by performing the above steps S210 to S230, in response to a plurality of SIM cards corresponding to the current slice parameter being identified, the plurality of SIM cards corresponding to the current slice parameter are determined as candidate SIM cards; after the candidate SIM cards are determined, the network status parameter of each of the candidate SIM cards can be acquired; and then, the target SIM card for establishing the slice connection can be determined according to the network status parameters of all the candidate SIM cards, such that the slice data connection for the application can be completed, that is, the SIM card corresponding to the slice connection for the application and the SIM card corresponding to the data connection are set as the same SIM card, thereby solving the problem that the application cannot initiate the slice data connection.

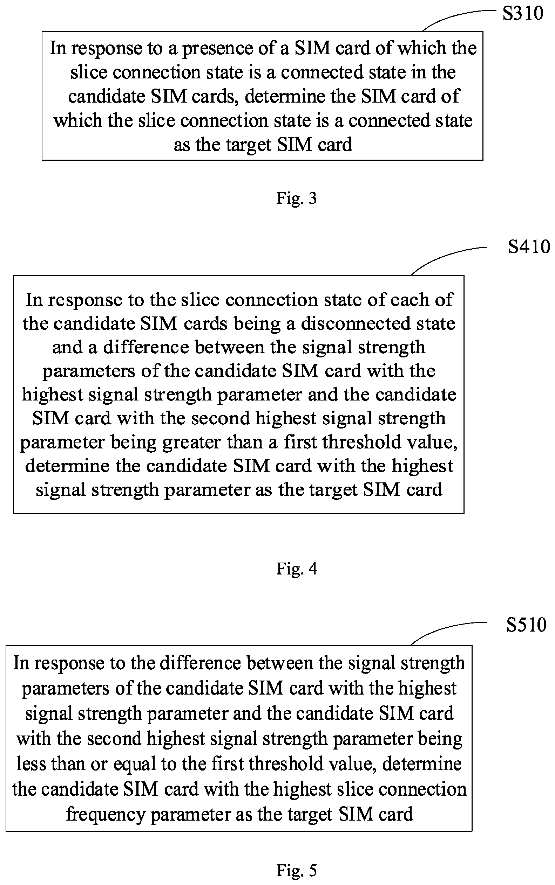

Referring to Fig. 3, when a plurality of SIM cards corresponding to the current slice parameter have been identified and the network status parameter includes the slice connection state, in an embodiment, step S230 includes but is not limited to the following step.

At S310, in response to a presence of a SIM card of which the slice connection state is a connected state in the candidate SIM cards, the SIM card of which the slice connection state is a connected state is determined as the target SIM card.

In an embodiment, when a plurality of candidate SIM cards corresponding to the current slice parameter have been identified, in response to one of the candidate SIM cards being in a connected state with a slice, in order not to affect the slice that is already connected, the candidate SIM card connected with the slice may be directly determined as the target SIM card, so that the slice data connection for the application can be achieved with a low connection cost, that is, the SIM card corresponding to the slice connection for the application and the SIM card corresponding to the data connection are set as the same SIM card, thereby solving the problem that the application cannot initiate the slice data connection.

Referring to Fig. 4, when a plurality of SIM cards corresponding to the current slice parameter have been identified and the network status parameter includes the signal strength parameter, in an embodiment, step S230 includes but is not limited to the following step.

At S410, in response to the slice connection state of each of the candidate SIM cards being a disconnected state and a difference between the signal strength parameters of the candidate SIM card with the highest signal strength parameter and the candidate SIM card with the second highest signal strength parameter being greater than a first threshold value, the candidate SIM card with the highest signal strength parameter is determined as the target SIM card.

In an embodiment, in response to a plurality of SIM cards corresponding to the current slice parameter being identified, in order to provide better network data transmission capability of the slice connection for the application, the signal strength parameters of candidate SIM cards may be compared and analyzed against each other. In response to a difference between the signal strength parameters of the candidate SIM card with the highest signal strength parameter and the candidate SIM card with the second highest signal strength parameter being greater than a first threshold value, the candidate SIM card with the highest signal strength parameter can be determined as the target SIM card, so that the candidate SIM card with high signal strength parameter can be selected as the target SIM card, and the slice data connection for the application can be completed, that is, the SIM card corresponding to the slice connection for the application and the SIM card corresponding to the data connection are set as the same SIM card, thereby solving the problem that the application cannot initiate the slice data connection.

In an embodiment, in response to two SIM cards corresponding to the current slice parameter being identified, i.e. there are two candidate SIM cards, which are a first SIM card and a second SIM card, respectively, signal strength parameters of the first SIM card and the second SIM card may be acquired. In response to a difference between the signal strength parameters of the first SIM card and the second SIM card being greater than or equal to the first threshold value, the first SIM card with the better signal strength parameter can be determined as the target SIM card, such that the slice data connection for the application can be completed, that is, the SIM card corresponding to the slice connection for the application and the SIM card corresponding to the data connection are set as the same SIM card, thereby solving the problem that the application cannot initiate the slice data connection.

It should be noted that the first threshold value may be set according to the actual situation and is not specifically limited in this embodiment.

Referring to Fig. 5, when a plurality of SIM cards corresponding to the current slice parameter have been identified and the network status parameter includes the slice connection frequency parameter corresponding to applications, in an embodiment, step S230 includes but is not limited to the following step.

At S510, in response to the difference between the signal strength parameters of the candidate SIM card with the highest signal strength parameter and the candidate SIM card with the second highest signal strength parameter being less than or equal to the first threshold value, the candidate SIM card with the highest slice connection frequency parameter is determined as the target SIM card.

In an embodiment, in response to a plurality of SIM cards corresponding to the current slice parameter being identified, the target SIM card can be determined from among the candidate SIM cards according to the slice connection frequency parameters for applications, such that the slice data connection for the application can be completed, that is, the SIM card corresponding to the slice connection for the application and the SIM card corresponding to the data connection are set as the same SIM card, thereby solving the problem that the application cannot initiate the slice data connection.

In an embodiment, in response to a plurality of SIM cards corresponding to the current slice parameter being identified, the slice connection frequency parameters of applications may be acquired. That is, by making a query to a second data module in the policy data module, the frequency at which each SIM card was used by the slice of each application can be obtained. Then, the target SIM card can be determined according to the slice connection frequency of the SIM cards used by applications, such that the slice data connection for the application can be completed, i.e. the SIM card corresponding to the slice connection for the application and the SIM card corresponding to the data connection are set as the same SIM card, thereby solving the problem that the application cannot initiate the slice data connection.

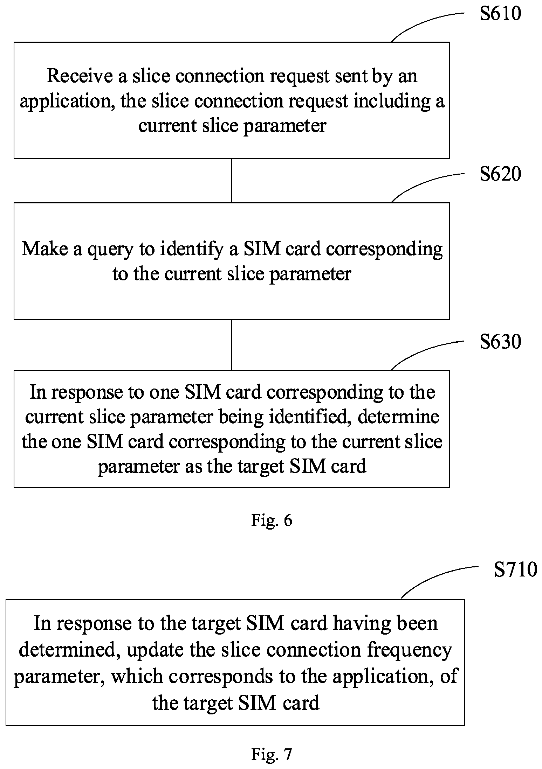

Referring to Fig. 6, in an embodiment, the SIM card selection method includes but is not limited to the following steps.

At S610, a slice connection request sent by an application is received, the slice connection request including a current slice parameter.

In an embodiment, a SIM card selection apparatus can acquire the slice connection request sent by the application, where the slice connection request may include the current slice parameter which can be used to determine the SIM card for the slice connection.

At S620, a query is made to identify a SIM card corresponding to the current slice parameter.

In an embodiment, the SIM card selection apparatus can make a query with the acquired current slice parameter to obtain the SIM card corresponding to the current slice parameter.

At S630, in response to one SIM card corresponding to the current slice parameter being identified, the one SIM card corresponding to the current slice parameter is determined as the target SIM card.

In an embodiment, in response to only one SIM card corresponding to the current slice parameter being identified in the terminal device, this one SIM card can be set as the target SIM card, the slice of the application is connected with this SIM card, and it is confirmed that data connection of the data network of the terminal device is enabled through this SIM card, such that the slice data connection for the application can be completed, that is, the SIM card corresponding to the slice connection for the application and the SIM card corresponding to the data connection are set as the same SIM card, thereby solving the problem that the application cannot initiate the slice data connection.

Referring to Fig. 7, in an embodiment, after S120, the method further includes but is not limited to the following step.

At S710, in response to the target SIM card having been determined, the slice connection frequency parameter, which corresponds to the application, of the target SIM card is updated.

In an embodiment, after the target SIM card has been confirmed, the slice connection frequency parameter, which corresponds to the application, of the target SIM card may be updated, which can improve the accuracy of determination for the next slice connection request, thereby completing the slice data connection for the application more accurately, that is, the SIM card corresponding to the slice connection for the application and the SIM card corresponding to the data connection are set as the same SIM card, thereby solving the problem that the application cannot initiate the slice data connection.

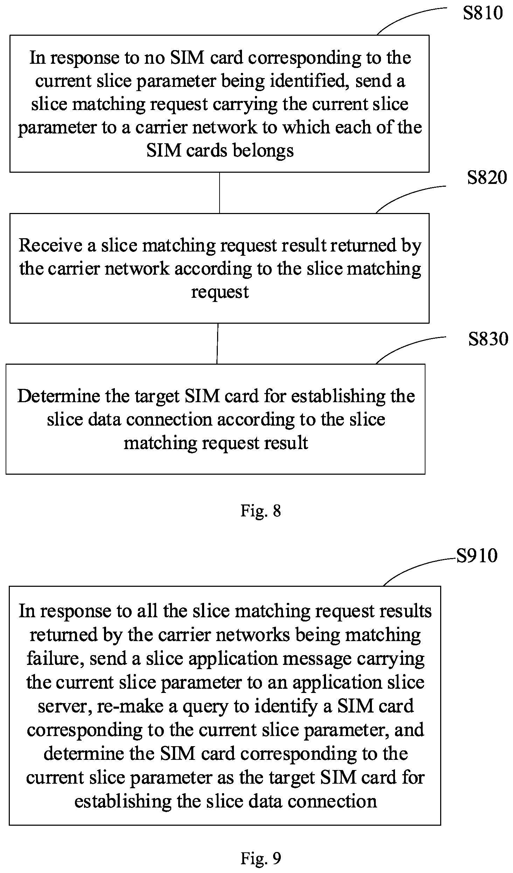

Referring to Fig. 8, in an embodiment, after making a query to identify the SIM card corresponding to the current slice parameter, step S120 includes but is not limited to the following sub-steps.

At S810, in response to no SIM card corresponding to the current slice parameter being identified, a slice matching request carrying the current slice parameter is sent to a carrier network to which each of the SIM cards belongs.

At S820, a slice matching request result returned by the carrier network according to the slice matching request is received.

At S830, the target SIM card for establishing the slice data connection is determined according to the slice matching request result.

In an embodiment, when the SIM card selection apparatus has initiated a query according to the slice connection request, but data information of the SIM card corresponding to the current slice parameter cannot be found, a slice matching request carrying the current slice parameter can be sent to a carrier network to which each SIM card in the terminal device belongs, to establish a matching relationship between the current slice parameter and the SIM cards. Once the matching relationship is established, a slice matching request result returned by the carrier network according to the slice matching request may be received to determine the target SIM card for establishing the slice data connection, that is, the SIM card corresponding to the slice connection for the application and the SIM card corresponding to the data connection are set as the same SIM card, thereby solving the problem that the application cannot initiate the slice data connection.

Referring to Fig. 9, in an embodiment, after S820, the method further includes but is not limited to the following step.

At S910, in response to all the slice matching request results returned by the carrier networks being matching failure, a slice application message carrying the current slice parameter is sent to an application slice server, a query is made again to identify a SIM card corresponding to the current slice parameter, and the SIM card corresponding to the current slice parameter is determined as the target SIM card for establishing the slice data connection.

In an embodiment, in response to all the slice matching request results returned by the carrier networks being matching failure, a slice application message can be sent to an application slice server, such that the application slice server initiates subscription, registration and change of the slice to the mobile carrier to which each of the SIM cards belongs. Once the subscription, registration and change of the slice is done, the data of the corresponding relationship between the current slice parameter and the SIM cards may be updated, for example, to the first data module. Then, a query is re-made to identify a SIM card corresponding to the current slice parameter, and the SIM card corresponding to the current slice parameter is determined as a target SIM card for establishing a slice data connection, thereby solving the problem that the application cannot initiate the slice data connection.

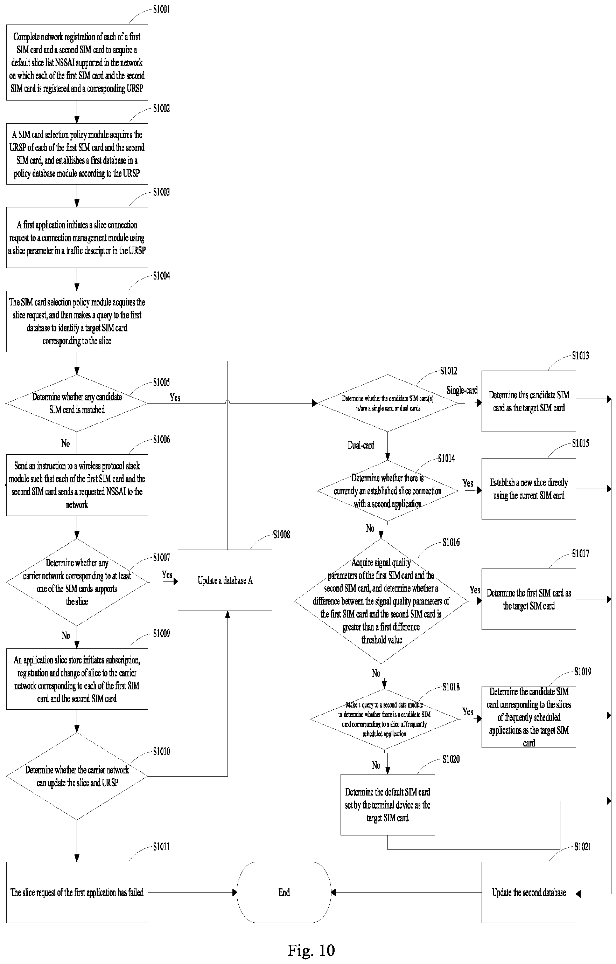

Referring to Fig. 10, in an embodiment, Fig. 10 is a flowchart of a SIM card selection method applied to a SIM card selection apparatus. In an embodiment, a SIM card selection system is provided in a terminal device with dual SIM cards. The terminal device includes a first SIM card and a second SIM card. The SIM card selection method includes but is not limited to the following steps.

At S1001, network registration of each of a first SIM card and a second SIM card is completed, and during the interaction process of the 5G network registration signaling, a default slice list NSSAI supported in the network on which each of the first SIM card and the second SIM card is registered and a corresponding URSP are acquired.

At S1002, the URSP of each of the first SIM card and the second SIM card is acquired, and a first data module is established according to the URSP.

It should be noted that the first data module may include data of the corresponding relationship between the traffic descriptor of the URSP of the slice and card description (such as slot ID or subscription ID).

At S1003, a first application initiates a slice connection request to a connection management module using a slice parameter (such as DNN or Application ID) in a traffic descriptor in the URSP.

At S 1004, after the slice connection request is acquired, a query is made to the first data module to identify a target SIM card corresponding to the slice.

At S 1005, it is determined whether any candidate SIM card is matched. If yes, the method proceeds to S1012. If no, the method proceeds to S1006.

At S1006, an instruction is sent to a wireless protocol stack module such that each of the first SIM card and the second SIM card sends a requested NSSAI to the network.

At S1007, it is determined whether any carrier network corresponding to at least one of the SIM cards supports the slice. If yes, the method proceeds to S1008. If no, the method proceeds to S1009.

At S1008, a data module A is updated and S1005 is executed again.

At S1009, an application slice server initiates subscription, registration and change of slice to the carrier network corresponding to each of the first SIM card and the second SIM card.

At S1010, it is determined whether the carrier network can update the slice and URSP. If yes, the method proceeds to S1011. If no, the method proceeds to S1008.

At S1011, the slice connection request of the first application has failed.

At S1012, it is determine whether the candidate SIM card(s) is/are a single card or dual cards. If dual cards, the method proceeds to S1014. If single card, the method proceeds to S1013.

At S1013, this candidate SIM card is determined as the target SIM card.

It should be noted that during the operation of the terminal device, a SIM card selection policy module can monitor the use frequency and foreground scheduling frequency of each application in the terminal device and, at the same time, also monitor the signal quality of the dual cards.

At S1014, it is determined whether there is currently an established slice connection with a second application. If yes, the method proceeds to S1015. If no, the method proceeds to S1016.

At S1015, a new slice is established directly using the current SIM card.

At S1016, signal quality parameters of the first SIM card and the second SIM card are acquired, and it is determined whether a difference between the signal quality parameters of the first SIM card and the second SIM card is greater than a first difference threshold value. If yes, the method proceeds to S1017. If no, the method proceeds to S1018.

At S1017, the first SIM card is determined as the target SIM card.

At S1018, a query is made to a second data module which is used for storing data of a target SIM card corresponding to a frequently scheduled application, and it is determined whether there is a candidate SIM card corresponding to the slice of the frequently scheduled application. If yes, the method proceeds to S1019. If no, the method proceeds to S1021.

At S1019, the candidate SIM card corresponding to the slices of the frequently scheduled applications is determined as the target SIM card.

At S1020, the default SIM card set by the terminal device is determined as the target SIM card.

At S1021, the second data module is updated.

In an embodiment, a SIM card selection apparatus can acquire the slice connection request sent by the first application, where the slice connection request may include the current slice parameter which can be used to determine the SIM card for the slice connection. Then, the apparatus can make a query to the first data module with the acquired current slice parameter to obtain the target SIM card corresponding to the current slice parameter, and can establish data connection and slice connection through the target SIM card. In response to failing to acquire the target SIM card corresponding to the current slice parameter in the first data module, the application slice server can initiate subscription, registration and change of slice to the carrier network corresponding to each of the first SIM card and the second SIM card and update the first data module. In response to two SIM cards corresponding to the current slice parameter being identified, the target SIM card can be determined according to network status parameters of the SIM cards. By means of the SIM card selection method described above, the slice data connection for the first application can be achieved, that is, the SIM card corresponding to the slice connection for the application and the SIM card corresponding to the data connection are set as the same SIM card, thereby solving the problem that the application cannot initiate the slice data connection.

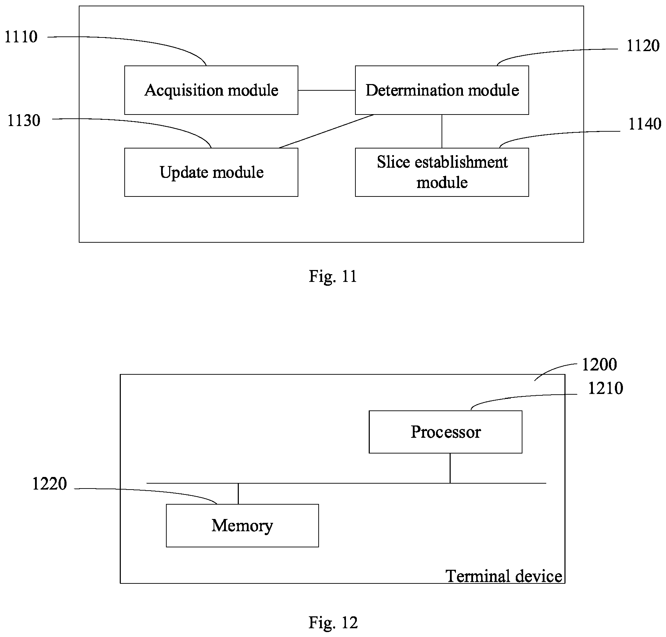

Fig. 11 is a schematic diagram of a SIM card selection apparatus. As shown in Fig. 11, the SIM card selection apparatus includes: an acquisition module 1110 configured to receive a slice connection request sent by an application, the slice connection request including a current slice parameter; and a determination module 1120 configured to make a query to identify a SIM card corresponding to the current slice parameter and determine the SIM card corresponding to the current slice parameter as a target SIM card for establishing a slice data connection. The acquisition module 1110 can acquire the slice connection request sent by the application, where the slice connection request may include the current slice parameter which can be used to determine the SIM card for the slice connection, and then the determination module 1120 can make a query with the acquired current slice parameter to obtain the target SIM card corresponding to the current slice parameter, and can establish data connection and slice connection through the target SIM card, thereby completing the slice data connection for the application, that is, the SIM card corresponding to the slice connection for the application and the SIM card corresponding to the data connection are set as the same SIM card, thereby solving the problem that the application cannot initiate the slice data connection.

In an embodiment, the determination module 1120 may be configured to: in response to one SIM card corresponding to the current slice parameter being identified, determine the one SIM card corresponding to the current slice parameter as the target SIM card. In response to only one SIM card corresponding to the current slice parameter being identified in the terminal device, the determination module 1120 may set this one SIM card as the target SIM card, connect the slice of the application with this SIM card, and confirm that data connection of the data network of the terminal device is enabled through this SIM card, such that the slice data connection for the application can be completed, that is, the SIM card corresponding to the slice connection for the application and the SIM card corresponding to the data connection are set as the same SIM card, thereby solving the problem that the application cannot initiate the slice data connection.

In an embodiment, the determination module 1120 may be configured to: in response to a plurality of SIM cards corresponding to the current slice parameter being identified, determine the plurality of SIM cards corresponding to the current slice parameter as candidate SIM cards; acquire a network status parameter of each of the candidate SIM cards; and determine the target SIM card for establishing the slice data connection from among the plurality of candidate SIM cards according to the network status parameter. In response to a plurality of SIM cards corresponding to the current slice parameter being identified, the determination module 1120 determines the plurality of SIM cards corresponding to the current slice parameter as candidate SIM cards; may then acquire the network status parameter of each of the candidate SIM cards after the candidate SIM cards are determined; and then, may determine the target SIM card for establishing the slice connection according to the network status parameters of all the candidate SIM cards, such that the slice data connection for the application can be completed, that is, the SIM card corresponding to the slice connection for the application and the SIM card corresponding to the data connection are set as the same SIM card, thereby solving the problem that the application cannot initiate the slice data connection.

In an embodiment, the determination module 1120 may be configured to: in response to the slice connection state of a candidate SIM card being a connected state, determine the candidate SIM card as the target SIM card. Here, the network status parameter includes the slice connection state, and in response to one of the candidate SIM cards being in a connected state with a slice, in order not to affect the slice that is already connected, the determination module 1120 may directly determine the candidate SIM card connected with the slice as the target SIM card, so that the slice data connection for the application can be achieved with a low connection cost, that is, the SIM card corresponding to the slice connection for the application and the SIM card corresponding to the data connection are set as the same SIM card, thereby solving the problem that the application cannot initiate the slice data connection.

In an embodiment, the determination module 1120 may be configured to: in response to the slice connection state of each of the candidate SIM cards being a disconnected state, rank the candidate SIM cards according to their signal strength parameters from high to low; and in response to the difference between the signal strength parameters of the candidate SIM card with the highest signal strength parameter and the candidate SIM card with the second highest signal strength parameter being greater than a first threshold value, determine the candidate SIM card with the highest signal strength parameter as the target SIM card. In order to provide better network data transmission capability of the slice connection for the application, in response to the slice connection state of each of the candidate SIM cards being a disconnected state, the determination module 1120 can rank the candidate SIM cards according to their signal strength parameters from high to low. In response to the difference between the signal strength parameters of the candidate SIM card with the highest signal strength parameter and the candidate SIM card with the second highest signal strength parameter being greater than the first threshold value, the candidate SIM card with the highest signal strength parameter is determined as the target SIM card, such that the slice data connection for the application can be completed, that is, the SIM card corresponding to the slice connection for the application and the SIM card corresponding to the data connection are set as the same SIM card, thereby solving the problem that the application cannot initiate the slice data connection.

In an embodiment, the determination module 1120 may be configured to: in response to the difference between the signal strength parameters of the candidate SIM card with the highest signal strength parameter and the candidate SIM card with the second highest signal strength parameter being less than or equal to the first threshold value, determine the candidate SIM card with the highest slice connection frequency parameter as the target SIM card. In response to the difference between the signal strength parameters of the candidate SIM card with the highest signal strength parameter and the candidate SIM card with the second highest signal strength parameter being less than or equal to the first threshold value, the determination module 1120 can determine the candidate SIM card with the highest slice connection frequency parameter as the target SIM card according to the slice connection frequency parameters for applications, such that the slice data connection for the application can be completed, that is, the SIM card corresponding to the slice connection for the application and the SIM card corresponding to the data connection are set as the same SIM card, thereby solving the problem that the application cannot initiate the slice data connection.

In an embodiment, the apparatus further includes an update module 1130. The update module 1130 may be configured to update slice connection frequency parameter of the target SIM card in response to the target SIM card having been determined. After the target SIM card has been confirmed, the update module 1130 may update the slice connection frequency parameter, corresponding to the application, of the target SIM card in the data of the second data module in the policy data module, which can improve the accuracy of determination for the next slice connection request, thereby completing the slice data connection for the application more accurately, that is, the SIM card corresponding to the slice connection for the application and the SIM card corresponding to the data connection are set as the same SIM card, thereby solving the problem that the application cannot initiate the slice data connection.

In an embodiment, the apparatus further includes a slice establishment module 1140. The slice establishment module 1140 may be configured to: in response to no SIM card corresponding to the current slice parameter being identified, send a slice matching request carrying the current slice parameter to a carrier network to which each of the SIM cards belongs; receive a slice matching request result returned by the carrier network according to the slice matching request; and determine the target SIM card for establishing the slice data connection according to the slice matching request result. When the SIM card selection apparatus has initiated a query according to the slice connection request, but data information of the SIM card corresponding to the current slice parameter cannot be found, the establishment module 1140 can send a slice matching request carrying the current slice parameter to a carrier network to which each SIM card in the terminal device belongs, to establish a matching relationship between the current slice parameter and the SIM cards. Once the matching relationship is established, the establishment module 1140 may receive a slice matching request result returned by the carrier network according to the slice matching request to determine the target SIM card for establishing the slice data connection, that is, the SIM card corresponding to the slice connection for the application and the SIM card corresponding to the data connection are set as the same SIM card, thereby solving the problem that the application cannot initiate the slice data connection.

In an embodiment, the slice establishment module 1140 may be configured to: in response to all the slice matching request results returned by the carrier networks being matching failure, send a slice application message carrying the current slice parameter to an application slice server, re-make a query to identify a SIM card corresponding to the current slice parameter, and determine the SIM card corresponding to the current slice parameter as the target SIM card for establishing the slice data connection. In response to all the slice matching request results returned by the carrier networks being matching failure, the slice establishment module 1140 can send a slice application message to an application slice server, such that the application slice server initiates subscription, registration and change of the slice to the mobile carrier to which each of the SIM cards belongs. Once the subscription, registration and change of the slice is done, the slice establishment module 1140 may update the data of the corresponding relationship between the current slice parameter and the SIM cards, for example, to the first data module. Then, a query is re-made to identify a SIM card corresponding to the current slice parameter, and the SIM card corresponding to the current slice parameter is determined as a target SIM card for establishing a slice data connection, thereby solving the problem that the application cannot initiate the slice data connection.

Another embodiment of the present disclosure provides a terminal device. Referring to Fig. 12, the terminal device 1200 includes a memory 1220, a processor 1210, and a computer program stored in the memory 1220 and executable by the processor 1210, where the computer program, when executed by the processor 1210, causes the processor 1210 to perform the SIM card selection method of any one of the embodiments described above.

Another embodiment of the present disclosure provides a computer-readable storage medium which stores computer-executable instructions which, when executed by a processor or controller, such as the processor in the terminal device of any of the embodiments above, can cause the processor to perform the traffic management method in any of the above embodiments, for example, to perform the above-described method steps S110 to S120 in Fig. 1, S210 to S230 in Fig. 2, S310 in Fig. 3, S410 to S420 in Fig. 4, S510 in Fig. 5, S610 to S630 in Fig. 6, S710 in Fig. 7, S810 to S830 in Fig. 8, S910 in Fig. 9, or S1001 to S1021 in Fig. 10.

The embodiments of the present disclosure have provided a SIM card selection method and apparatus, a terminal device and a storage medium. The SIM card selection method includes the following steps: after receiving a slice connection request including a current slice parameter sent by an application, a terminal device may make a query to identify a SIM card corresponding to the current slice parameter, and determine the SIM card corresponding to the current slice parameter as a target SIM card for establishing a slice data connection, such that the SIM card corresponding to the slice connection for the application and the SIM card corresponding to the data connection are the same SIM card, thereby solving the problem that the application cannot initiate the slice data connection.

It can be understood by those having ordinary skill in the art that all or some of the steps of the methods and systems disclosed above may be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those having ordinary skill in the art, the term computer-readable storage medium includes volatile and nonvolatile, removable and non-removable media implemented in any method or technique for storing information, such as computer-readable instructions, data structures, program modules or other data. A computer storage medium includes but is not limited to RAM, ROM, EEPROM, flash memory or other memory technologies, CD-ROM, digital versatile disk (DVD) or other optical disk storage, cassettes, magnetic tapes, magnetic disk storage or other magnetic storage devices, or any other medium that can be configured to store desired information and can be accessed by a computer. Furthermore, it is well known to those having ordinary skill in the art that communication media typically contain computer-readable instructions, data structures, program modules or other data in a modulated data signal such as a carrier wave or other transmission mechanism, and may include any information transmission media.

The above is a detailed description of preferred implementations of the present disclosure, but the present disclosure is not limited to the above-mentioned embodiments. Those having ordinary skill in the art can also make various equivalent modifications or replacements without departing from the spirit of the present disclosure, and these equivalent modifications or replacements are all included in the scope defined by the claims of the present disclosure.

## Claims

1. A subscriber identity module (SIM) card selection method, which is applied to a terminal device comprising at least two SIM cards, the method comprising:
receiving a slice connection request sent by an application, the slice connection request comprising a current slice parameter; and
making a query to identify a SIM card corresponding to the current slice parameter, and determining the SIM card corresponding to the current slice parameter as a target SIM card for establishing a slice data connection.

2. The SIM card selection method of claim 1, wherein determining the SIM card corresponding to the current slice parameter as a target SIM card for establishing a slice data connection comprises:
in response to a plurality of SIM cards corresponding to the current slice parameter being identified, determining the plurality of SIM cards corresponding to the current slice parameter as candidate SIM cards;
acquiring a network status parameter of each of the candidate SIM cards; and
determining the target SIM card for establishing the slice data connection from among the candidate SIM cards according to the network status parameter,
wherein the network status parameter includes at least one of a slice connection state, a signal strength parameter, or a slice connection frequency parameter.

3. The SIM card selection method of claim 2, wherein the network status parameter comprises the slice connection state, and determining the target SIM card for establishing the slice data connection from among the candidate SIM cards according to the network status parameter comprises:
in response to a presence of a SIM card of which the slice connection state is a connected state in the candidate SIM cards, determining the SIM card of which the slice connection state is a connected state as the target SIM card.

4. The SIM card selection method of claim 3, wherein the network status parameter comprises the slice connection state and the signal strength parameter, and determining the target SIM card for establishing the slice data connection from among the candidate SIM cards according to the network status parameter comprises:
in response to the slice connection state of each of the candidate SIM cards being a disconnected state and a difference between the signal strength parameters of the candidate SIM card with the highest signal strength parameter and the candidate SIM card with the second highest signal strength parameter being greater than a first threshold value, determining the candidate SIM card with the highest signal strength parameter as the target SIM card.

5. The SIM card selection method of claim 4, wherein the network status parameter comprises the slice connection frequency parameter, and determining the target SIM card for establishing the slice data connection from among the candidate SIM cards according to the network status parameter comprises:
in response to the difference between the signal strength parameters of the candidate SIM card with the highest signal strength parameter and the candidate SIM card with the second highest signal strength parameter being less than or equal to the first threshold value, determining the candidate SIM card with the highest slice connection frequency parameter as the target SIM card.

6. The SIM card selection method of claim 1, wherein determining the SIM card corresponding to the current slice parameter as a target SIM card for establishing a slice data connection comprises:
in response to one SIM card corresponding to the current slice parameter being identified, determining the one SIM card corresponding to the current slice parameter as the target SIM card.

7. The SIM card selection method of any one of claims 1 to 6, further comprising:
in response to the target SIM card having been determined, updating the slice connection frequency parameter of the target SIM card.

8. The SIM card selection method of claim 1, wherein after making a query to identify the SIM card corresponding to the current slice parameter, the method further comprises:
in response to no SIM card corresponding to the current slice parameter being identified, sending a slice matching request carrying the current slice parameter to a carrier network to which each of the SIM cards belongs;
receiving a slice matching request result returned by the carrier network according to the slice matching request; and
determining the target SIM card for establishing the slice data connection according to the slice matching request result.

9. The SIM card selection method of claim 8, wherein after receiving a slice matching request result returned by the carrier network according to the slice matching request, the method further comprises:
in response to all the slice matching request results returned by the carrier networks being matching failure, sending a slice application message carrying the current slice parameter to an application slice server, re-making a query to identify a SIM card corresponding to the current slice parameter, and determining the SIM card corresponding to the current slice parameter as the target SIM card for establishing the slice data connection.

10. A SIM card selection apparatus, comprising:
an acquisition module configured to receive a slice connection request sent by an application, the slice connection request comprising a current slice parameter; and
a determination module configured to make a query to identify a SIM card corresponding to the current slice parameter and determine the SIM card corresponding to the current slice parameter as a target SIM card for establishing a slice data connection.

11. A terminal device, comprising a memory, a processor, and a computer program stored in the memory and executable by the processor, wherein the computer program, when executed by the processor, causes the processor to perform the SIM card selection method of any one of claims 1 to 9.

12. A computer-readable storage medium, storing computer-executable instructions configured to cause a computer to perform the SIM card selection method of any one of claims 1 to 9.
